# EUROPEAN PATENT APPLICATION

(11) **EP 4 803 065 A1**
(43) Date of publication of application: **09.09.2026**
(21) Application number: 24897556.7
(22) Date of filing: 26.11.2024
(51) Int. Cl.: A61J 1/20, G01N 1/00

(54) **COLLECTION KIT**

(30) Priority: 28.11.2023 JP 2023200670
(71) Applicant: Terumo Kabushiki Kaisha, Tokyo 151-0072 (JP)
(72) Inventor: KAWAGUCHI, Satoshi, Fujinomiya-shi, Shizuoka 418-0004 (JP)
(74) Representative: TBK
(86) International application number: PCT/JP2024/041861
(87) International publication number: WO 2025/115872

(57) **Abstract**

A collection kit (10) includes an inflow tube (16) to which a medical bag (12) is connected, and a collection bag (18) that is connected to a downstream side of the inflow tube (16). The collection bag (18) includes a plurality of accommodation chambers (26) that accommodate a collection target (M) of the medical bag (12), one outflow port (36) for respectively transferring the collection target (M) from the plurality of accommodation chambers (26) to sampling containers (14), and an exhaust portion (38) for exhausting air inside the plurality of accommodation chambers (26).

## Description

### Technical Field

The present invention relates to a collection kit for transferring a collection target (mainly liquid medication) accommodated in a medical bag into a plurality of sampling containers.

### Background Art

Blood products include a red blood cell product, a plasma product, a platelet product, and a whole blood product. In order to ensure safety of the blood products, a small amount of a sample may be collected to perform a culture test. In the culture test, the sample is collected into a culture bottle (sampling container), and the culture bottle is placed in an environment suitable for bacterial growth to detect the presence or absence of a pathogen.

Hereinafter, an operation procedure of transferring the platelet product from a platelet bag to two culture bottles will be described using a medical bag (hereinafter, referred to as platelet bag) accommodating the platelet product as an example.

A small-capacity collection bag is connected to the platelet bag, and a part of the platelet product in the platelet bag is transferred to the collection bag. After that, the collection bag is disconnected from the platelet bag. Next, in a clean bench, the collection bag is connected to a tube extending from a sample collection tube, and a prescribed amount of the platelet product is transferred from the collection bag to the sample collection tube with reference to scales of the sample collection tube. After that, two culture bottles are sequentially connected to the sample collection tube, and a prescribed amount of the platelet product is transferred to the two culture bottles. One of the two culture bottles is a culture bottle used for anaerobic culture, and the other is a culture bottle used for aerobic culture.

For example, U.S. Patent No. 8777921 discloses a collection kit for collecting a sample from a medical bag.

### Citation List

### Patent Literature

Patent Literature 1: U.S. Patent No. 8777921

### Summary of Invention

From the viewpoint of further improving the safety of the blood product, culture tests on all blood products are being considered. Therefore, it is required to improve the work efficiency of the culture test for the blood product. Furthermore, in a case where the culture tests are performed on all samples, it is desirable that a device for dispensing the blood product into the culture bottles can have a simple structure and achieve cost reduction. Furthermore, it is desirable that a predetermined amount of the collection target can be collected into each of the plurality of sampling containers.

An object of the present invention is to solve the above-described problems.
(1) An aspect of the present invention is a collection kit for sequentially collecting a collection target accommodated in a medical bag into a plurality of sampling containers, the collection kit including: an inflow tube to which the medical bag is connected; and a collection bag that is connected to a downstream side of the inflow tube and formed by overlapping and welding two flexible sheets, in which the collection bag includes a plurality of accommodation chambers that accommodate the collection target, one outflow port for respectively transferring the collection target from the plurality of accommodation chambers to the plurality of sampling containers, and an exhaust portion for exhausting air inside the plurality of accommodation chambers.
   According to this collection kit, by providing only one outflow port for sequentially collecting into the plurality of sampling containers, the collection kit having the accommodation chambers can be reduced in cost with a simple structure. Furthermore, the work efficiency at the time of collecting the collection target into the plurality of sampling containers can be improved, and a predetermined amount of the collection target can be collected.
(2) In the collection kit according to (1), a connection channel that is provided between the plurality of accommodation chambers and connects the accommodation chambers, which are adjacent to each other, may be further provided, the inflow tube may be connected to one of the plurality of accommodation chambers, and an outflow channel connected to the outflow port may be connected to one of the plurality of accommodation chambers or another accommodation chamber.
   With this configuration, the collection kit can be made compact in the width direction intersecting the extending direction of the connection channel.
(3) In the collection kit according to (1), a plurality of the inflow tubes that are respectively connected to the plurality of accommodation chambers, and an outflow channel that connects the plurality of accommodation chambers and the outflow port may be further provided.
   With this configuration, when the medical bag is connected to each of the plurality of the inflow tubes, the collection target can be accommodated in each of the plurality of accommodation chambers from each inflow tube.
(4) In the collection kit according to (1), the collection bag may include a common channel that is connected to the downstream side of the inflow tube, a plurality of branch channels that are branched from the common channel and respectively connected to the plurality of accommodation chambers, and an outflow channel that connects the plurality of accommodation chambers and the outflow port.
   With this configuration, the collection target can be accommodated in the plurality of accommodation chambers through one common channel.
(5) In the collection kit according to any one of (1) to (4), an adapter to which the plurality of sampling containers are sequentially attached may be connected to the outflow port.

With this configuration, it is possible to easily connect the plurality of sampling containers to the outflow port by sequentially attaching the plurality of sampling containers to the adapter.

According to the present invention, since the collection bag includes the plurality of accommodation chambers that accommodate the collection target and one outflow port for respectively transferring the collection target from the plurality of accommodation chambers to the plurality of sampling containers, and the collection kit includes only one outflow port, the collection kit including the plurality of accommodation chambers can be reduced in cost with a simple structure. Furthermore, the work efficiency at the time of collecting the collection target into the plurality of sampling containers can be improved, and a predetermined amount of the collection target can be collected.

### Brief Description of Drawings

[Fig. 1] Fig. 1 is a schematic front view of a collection kit according to a first embodiment of the present invention.
[Fig. 2] Fig. 2 is an explanatory view illustrating a case of storing a collection target in an accommodation chamber of a collection kit.
[Fig. 3] Fig. 3A is an explanatory view illustrating a case of transferring a collection target from a first accommodation chamber to a first sampling container. Fig. 3B is an explanatory view illustrating a case of transferring a collection target from a second accommodation chamber to a second sampling container.
[Fig. 4] Fig. 4 is a schematic front view of a collection kit according to a first modification example.
[Fig. 5] Fig. 5 is a schematic front view of a collection kit according to a second modification example.
[Fig. 6] Fig. 6 is a schematic front view of a collection kit according to a second embodiment of the present invention.
[Fig. 7] Fig. 7A is an explanatory view illustrating a case of storing a collection target in a first accommodation chamber of a collection kit. Fig. 7B is an explanatory view illustrating a case of storing a collection target in a second accommodation chamber of a collection kit.
[Fig. 8] Fig. 8A is an explanatory view illustrating a case of transferring a collection target from a first accommodation chamber to a first sampling container. Fig. 8B is an explanatory view illustrating a case of transferring a collection target from a second accommodation chamber to a second sampling container.
[Fig. 9] Fig. 9 is a schematic front view of a collection kit according to a third embodiment of the present invention.

### Description of Embodiments

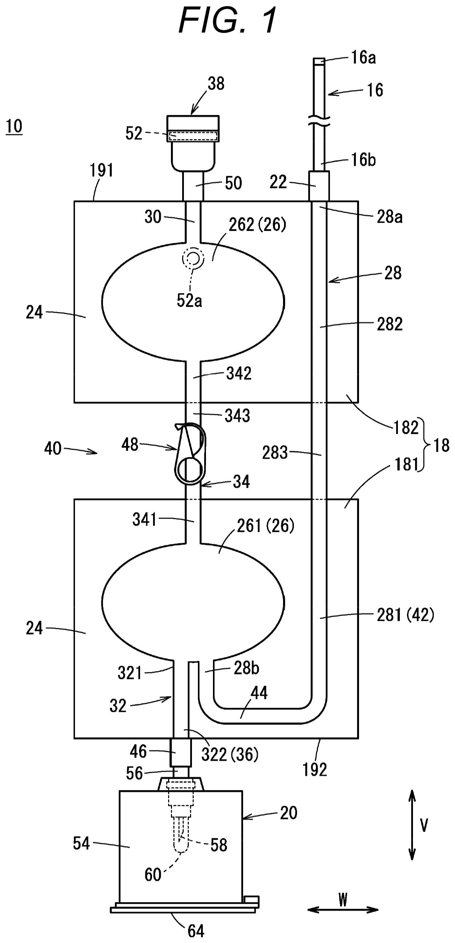

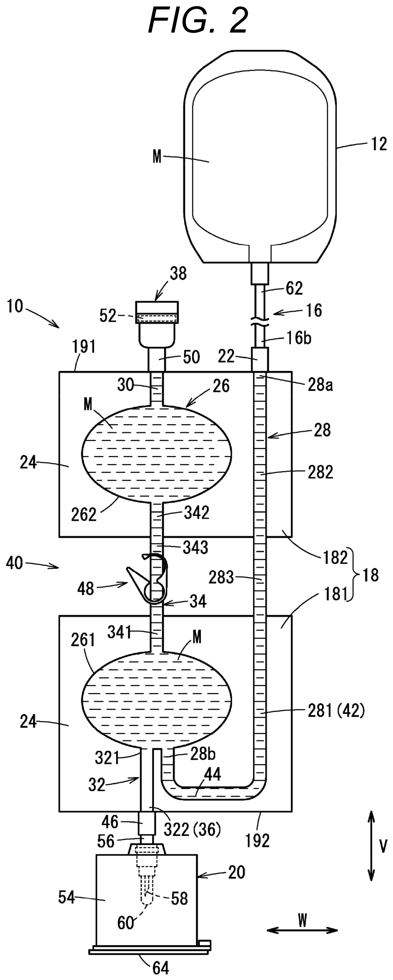

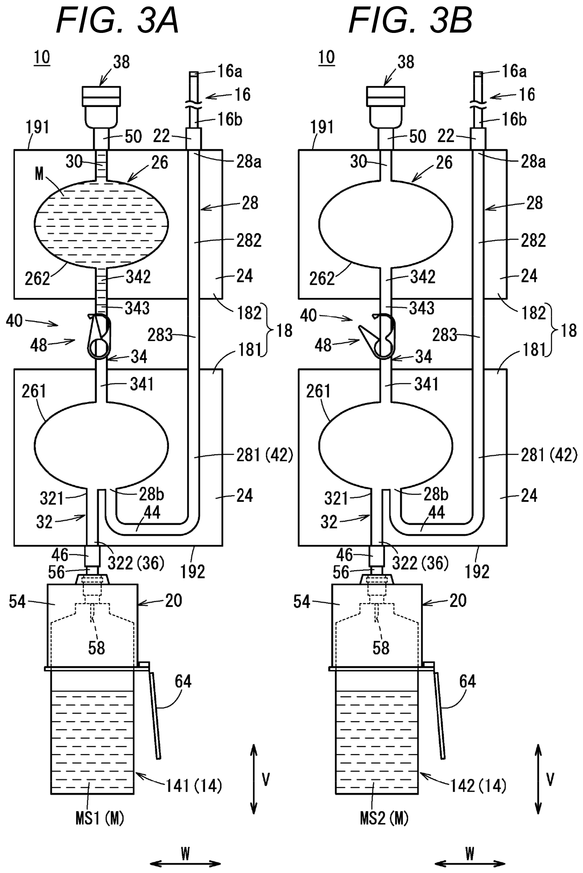

As illustrated in Fig. 1, a collection kit 10 according to a first embodiment is used to transfer a collection target M accommodated in a medical bag 12 illustrated in Fig. 2 to a plurality of sampling containers 14 (see Figs. 3A and 3B). The collection target M is, for example, a blood product such as a platelet product. The collection target M may be a medication other than the blood product. The collection target M may be a liquid sample other than the medication. The medical bag 12 may be a blood bag system for centrifuging blood containing a plurality of components into a plurality of components having different specific gravities (for example, three components of a low-specific-gravity component, a medium-specific-gravity component, and a high-specific-gravity component, or two components of a low-specific-gravity component and a high-specific-gravity component), and separately accommodating and storing each of the components separately in different bags. In this case, the collection kit 10 may be connected to the blood bag system.

As illustrated in Fig. 1, the collection kit 10 includes an inflow tube 16 to which the medical bag 12 (see Fig. 2) is connected, a collection bag 18, and an adapter 20. The adapter 20 may be detachable from the collection bag 18. Hereinafter, an extending direction of the inflow tube 16 in the collection kit 10 illustrated in Fig. 1 (a direction of arrow V) is referred to as an up-down direction. A direction orthogonal to the up-down direction (a direction of arrow W) is referred to as a width direction of the collection kit 10, and a direction orthogonal to the up-down direction and the width direction is referred to as a thickness direction of the collection kit 10. As illustrated in Fig. 1, the collection kit 10 is generally used in an orientation in which the up-down direction is aligned with a vertical direction.

The inflow tube 16 is a transparent or semi-transparent medical tube. The inflow tube 16 is made of, for example, a thermoplastic resin such as a vinyl chloride resin. The inflow tube 16 can be connected to or separated from another medical tube without exposing the inside thereof to the outside air by using an aseptic connection device, a tube sealer, or the like.

The inflow tube 16 has an upstream end portion 16a and a downstream end portion 16b. In an initial state in which the collection kit 10 is provided as a product, the upstream end portion 16a is sealed by welding. The downstream end portion 16b is connected to an upper side portion 191 of the collection bag 18 via a relay member 22. The relay member 22 is, for example, a sleeve made of a material harder than that of the collection bag 18.

The collection bag 18 is connected to a downstream side of the inflow tube 16. The collection bag 18 includes two flexible sheets 24 that are overlapped in the thickness direction and welded to each other. The collection bag 18 includes a plurality of accommodation chambers 26, an inflow channel 28, an exhaust channel 30, an outflow channel 32, a connection channel 34, one outflow port 36, and an exhaust portion 38. A part of the inflow channel 28, the exhaust channel 30, the outflow channel 32, and the plurality of accommodation chambers 26 are disposed between the two flexible sheets 24, and each of them bulges in the thickness direction of the collection bag 18.

The collection bag 18 further includes a first bag 181 and a second bag 182. The first bag 181 and the second bag 182 are arranged in parallel to be separated from each other in the up-down direction. Each of the first bag 181 and the second bag 182 is formed of two flexible sheets 24. The second bag 182 is disposed above the first bag 181. A gap 40 is provided between the first bag 181 and the second bag 182. The gap 40 is a space extending in the width direction between the first bag 181 and the second bag 182.

Note that the collection bag 18 is not limited to a case of including the first bag 181 and the second bag 182, which are divided in the up-down direction. For example, the collection bag 18 may include one bag. In the front view of the collection bag 18 illustrated in Fig. 1, each of the first bag 181 and the second bag 182 has a rectangular shape elongated in the width direction relative to the up-down direction. Note that the first bag 181 and the second bag 182 are not limited to the rectangular shape elongated in the width direction. For example, the first bag 181 and the second bag 182 may have a rectangular shape elongated in the up-down direction relative to the width direction, or may have a rectangular shape in which the width direction and the up-down direction are substantially equal to each other.

The plurality of accommodation chambers 26 accommodate the collection target M. The plurality of accommodation chambers 26 include a first accommodation chamber 261 and a second accommodation chamber 262. The first accommodation chamber 261 has an elliptical shape elongated in the width direction of the first bag 181. The volume of the first accommodation chamber 261 is, for example, about 8 mL to about 10 mL. The first accommodation chamber 261 temporarily stores the collection target M collected into a first sampling container 141. Note that the plurality of accommodation chambers 26 are not limited to a case where two accommodation chambers 26 are provided. The plurality of accommodation chambers 26 may be three or more accommodation chambers.

The second accommodation chamber 262 has an elliptical shape elongated in the width direction of the second bag 182. The volume of the second accommodation chamber 262 is, for example, about 8 mL to about 10 mL. The volume of the second accommodation chamber 262 and the volume of the first accommodation chamber 261 are the same. The second accommodation chamber 262 temporarily stores the collection target M collected into a second sampling container 142. Note that each of the first accommodation chamber 261 and the second accommodation chamber 262 is not limited to an elliptical shape. Each of the first accommodation chamber 261 and the second accommodation chamber 262 may have a shape other than the elliptical shape. Furthermore, the volume of the first accommodation chamber 261 and the volume of the second accommodation chamber 262 may be different.

The inflow channel 28 is disposed on one end side of the collection bag 18 in the width direction. The inflow channel 28 includes a first inflow channel 281 provided in the first bag 181, a second inflow channel 282 provided in the second bag 182, and an intermediate channel 283 provided between the first inflow channel 281 and the second inflow channel 282. The first inflow channel 281 is provided inside the first bag 181. The first inflow channel 281 includes a channel body 42 extending in the up-down direction and a turn-back portion 44 provided at a lower end portion of the channel body 42. The channel body 42 extends along the up-down direction. The turn-back portion 44 extends from the lower end of the channel body 42 toward the center in the width direction and is then folded back upward. The downstream end of the turn-back portion 44 is connected to the lower portion of the first accommodation chamber 261.

The second inflow channel 282 is provided inside the second bag 182 and extends in the up-down direction. The intermediate channel 283 is provided in the gap 40 and exposed to the outside of the first bag 181 and the second bag 182.

The inflow channel 28 has an upstream end portion 28a and a downstream end portion 28b. The upstream end portion 28a is provided at the upper end of the second inflow channel 282. The upstream end portion 28a is connected to the downstream end portion 16b of the inflow tube 16 via the relay member 22. The downstream end portion 28b is disposed at the end portion of the turn-back portion 44 of the first inflow channel 281. Note that the inflow channel 28 is not limited to a case of being connected to the first accommodation chamber 261. For example, the inflow channel 28 may be connected to the lower portion of the second accommodation chamber 262.

The exhaust channel 30 is provided in the second bag 182. The exhaust channel 30 is connected to the uppermost portion of the second accommodation chamber 262. The upper end of the exhaust channel 30 is disposed at the upper side portion 191 of the second bag 182 and connected to the exhaust portion 38.

The outflow channel 32 is provided in the first bag 181 and extends in the up-down direction. The upper end portion 321 of the outflow channel 32 is connected to the lowermost portion of the first accommodation chamber 261. That is, both the outflow channel 32 and the inflow channel 28 are connected to the first accommodation chamber 261. Note that the outflow channel 32 is not limited to a case of being connected to the lowermost portion of the first accommodation chamber 261. The outflow channel 32 is only required to be connected to at least the lower portion of the first accommodation chamber 261. The lower end portion 322 of the outflow channel 32 is disposed at the lower side portion 192 of the first bag 181. The lower end portion 322 of the outflow channel 32 includes the one outflow port 36. The outflow port 36 is a port for transferring the collection target M from the first accommodation chamber 261 and the second accommodation chamber 262 to the plurality of sampling containers 14. Note that the outflow channel 32 is not limited to a case of being connected to the first accommodation chamber 261. For example, the upper end portion 321 of the outflow channel 32 may be connected to the lowermost portion of the second accommodation chamber 262.

Only one outflow port 36 is provided in the collection kit 10. That is, two or more outflow ports 36 are not provided. A connection member 46 is connected to the outflow port 36. The connection member 46 protrudes downward from the lower end of the first bag 181. The connection member 46 includes a breakable plug (not illustrated) therein. In the initial state, the outflow port 36 is sealed by the plug.

The connection channel 34 extends in the up-down direction and connects the first accommodation chamber 261 and the second accommodation chamber 262. The connection channel 34 includes a first channel portion 341 provided in the first bag 181, a second channel portion 342 provided in the second bag 182, and an exposed portion 343 provided between the first channel portion 341 and the second channel portion 342. The lower end of the first channel portion 341 is connected to the upper portion of the first accommodation chamber 261. The upper end of the first channel portion 341 is disposed at the upper side of the first bag 181. The upper end of the second channel portion 342 is connected to the lowermost portion of the second accommodation chamber 262. Note that the present invention is not limited to the case where the upper end of the second channel portion 342 is connected to the lowermost portion of the second accommodation chamber 262. The upper end of the second channel portion 342 may be connected to at least the lower portion of the second accommodation chamber 262. The lower end of the second channel portion 342 is disposed on the lower side of the second bag 182. The exposed portion 343 connects the upper end of the first channel portion 341 and the lower end of the second channel portion 342. The exposed portion 343 is disposed in the gap 40 of the collection bag 18. The exposed portion 343 is provided with a closing member 48. The closing member 48 is, for example, a clamp. The closing member 48 is provided so as to be able to block the flow of the collection target M in the connection channel 34. By clamping the connection channel 34 with the closing member 48, the communication of the connection channel 34 is blocked. By releasing the clamping of the connection channel 34 by the closing member 48, the connection channel 34 is opened. Note that the closing member 48 may be detachable from the connection channel 34.

The exhaust portion 38 is provided to exhaust air inside the first accommodation chamber 261 and the second accommodation chamber 262. The exhaust portion 38 is connected to the upper end portion of the exhaust channel 30 via a mounting member 50. The mounting member 50 seals a space between the exhaust portion 38 and the collection bag 18 in a liquid-tight and air-tight manner. The exhaust portion 38 includes a filter 52 that allows passage of gas and blocks passage of liquid. In a case where the main component of the collection target M is water, the filter 52 is preferably a hydrophilic filter. In this case, when the collection target M moves to the filter 52 through the exhaust channel 30 and comes into contact with the filter 52, the pores of the filter 52 are closed by the liquid. After the pores of the filter 52 are blocked, the filter 52 prevents passage of gas and liquid. Therefore, leakage of the collection target M from the first accommodation chamber 261 and the second accommodation chamber 262 to the outside is prevented. Note that an example of the collection target M whose main component is water is a blood product.

Note that the exhaust portion 38 is not limited to being connected to the upper end portion of the exhaust channel 30 via the mounting member 50. For example, a filter 52a may be provided at the flexible sheet 24 of the collection bag 18 (in Fig. 1, see two-dot chain line shape). In this case, the filter 52a is disposed on the wall portion of the flexible sheet 24 facing the second accommodation chamber 262, and the air in the second accommodation chamber 262 can be directly discharged to the atmosphere through the filter 52a.

The adapter 20 is connected to the lower end portion 322 of the outflow channel 32 via the connection member 46. The adapter 20 is disposed so as to protrude downward relative to the lower side portion 192 of the first bag 181. The adapter 20 includes an adapter body 54 and a communication tube portion 56 provided at the upper end portion of the adapter body 54. When the communication tube portion 56 is inserted into the inner hole of the connection member 46, the adapter 20 is connected to the outflow channel 32. The connection member 46 seals a space between the communication tube portion 56 and the collection bag 18 in a liquid-tight and air-tight manner.

The adapter 20 includes a needle tube 58 and a rubber cover 60 covering the needle tube 58. The needle tube 58 is provided inside the adapter body 54 and is connected to the communication tube portion 56. When the neck portion of the sampling container 14 is inserted into the adapter body 54, the needle tube 58 penetrates a stopper (not illustrated) of the sampling container 14 (see Figs. 3A and 3B). As the connection member 46 is opened, the sampling container 14 and the first accommodation chamber 261 communicate with each other via the communication tube portion 56 and the needle tube 58.

When the needle tube 58 punctures the stopper of the sampling container 14, the rubber cover 60 is compressed by being pushed toward the collection bag 18. The needle tube 58 penetrates the compressed rubber cover 60. When the needle tube 58 comes out of the stopper of the first sampling container 141, the rubber cover 60 extends by an elastic restoring force to cover the needle tube 58 again.

Next, a collection method for dispensing the collection target M into the first sampling container 141 and the second sampling container 142 using the collection kit 10 will be described.

First, as illustrated in Fig. 2, a process of connecting the medical bag 12 to the inflow tube 16 is performed. The operator connects the medical bag 12 accommodating the collection target M such as a platelet product to the inflow tube 16. At this time, the medical bag 12 is disposed above the collection bag 18. The operator joins a supply tube 62 of the medical bag 12 to the inflow tube 16. At this time, the closing member 48 is in an open state where the blocked state of the connection channel 34 is released.

Next, a process of transferring the collection target M to the first accommodation chamber 261 and the second accommodation chamber 262 is performed. The collection target M is, for example, a liquid and is flowable. Therefore, the collection target M flows out of the medical bag 12 by gravity and flows into the inflow channel 28 via the supply tube 62 and the inflow tube 16. Specifically, the collection target M moves downward from the inflow tube 16 along the second inflow channel 282, the intermediate channel 283, and the first inflow channel 281 by gravity. The collection target M moves upward toward the first accommodation chamber 261 through the turn-back portion 44 of the first inflow channel 281. The collection target M flows into the first accommodation chamber 261 from the inflow channel 28.

When the collection target M flows into the first accommodation chamber 261, the air remaining in the first accommodation chamber 261 is pushed out toward the second accommodation chamber 262 through the connection channel 34. The air from the second accommodation chamber 262 is discharged to the atmosphere through the exhaust channel 30 and the filter 52 of the exhaust portion 38.

After the collection target M fills the first accommodation chamber 261, the collection target M moves to the second accommodation chamber 262 through the connection channel 34. The air remaining in the second accommodation chamber 262 is discharged to the atmosphere through the exhaust channel 30 and the exhaust portion 38.

After the first accommodation chamber 261 and the second accommodation chamber 262 are filled with the collection target M, the collection target M flows into the filter 52 via the exhaust channel 30. When the collection target M comes into contact with the filter 52, the collection target M is captured and held in the pores of the filter 52. Thus, the filter 52 blocks the collection target M in the exhaust portion 38. Therefore, the exhaust portion 38 becomes clogged, and thus the collection target M is prevented from passing through the filter 52 and being discharged to the outside. The necessary amount (for example, about 8 mL to 10 mL) of the collection target M is accommodated in each of the first accommodation chamber 261 and the second accommodation chamber 262. The supply of the collection target M from the medical bag 12 to the collection bag 18 is stopped.

Next, the medical bag 12 is separated from the inflow tube 16. The inflow tube 16 is disconnected from the supply tube 62 of the medical bag 12, and at the same time, the upstream end portion 16a of the inflow tube 16 is sealed by welding. For welding the inflow tube 16, for example, a tube sealer such as a high-frequency sealer or an ultrasonic sealer is used. The medical bag 12 disconnected from the collection kit 10 is stored until the test is completed.

Next, a process of transferring the collection target M in the first accommodation chamber 261 to the first sampling container 141 is performed. At this time, as illustrated in Fig. 3A, the operation is performed in a state where the communication of the connection channel 34 is blocked by the closing member 48. That is, the communication between the first accommodation chamber 261 and the second accommodation chamber 262 is blocked by the closing member 48, and thus the movement of the collection target M between the first accommodation chamber 261 and the second accommodation chamber 262 is prevented.

The first sampling container 141 is connected to the adapter 20. The lid portion 64 of the adapter 20 is opened, and the neck portion of the first sampling container 141 is inserted into the adapter body 54. Thus, the needle tube 58 provided inside the adapter body 54 penetrates the stopper of the first sampling container 141.

The operator bends the plug of the connection member 46 to break the plug, thereby opening the outflow channel 32. The collection target M in the first accommodation chamber 261 is sucked out by the negative pressure inside the first sampling container 141, passes through the outflow channel 32, the outflow port 36, the connection member 46, the communication tube portion 56 of the adapter 20, and the needle tube 58, and flows into the first sampling container 141. At this time, since the communication of the connection channel 34 is blocked by the closing member 48, the collection target M in the second accommodation chamber 262 is not sucked out through the outflow channel 32. Thus, substantially the entire amount of the collection target M stored in the first accommodation chamber 261 is transferred to the first sampling container 141. The amount of the collection target M in the first sampling container 141 is, for example, about 8 mL to 10 mL.

As illustrated in Fig. 3B, after the first sampling container 141 is removed from the adapter 20, a process of connecting the second sampling container 142 to the adapter 20 and transferring the collection target M in the second accommodation chamber 262 to the second sampling container 142 is performed. Since the connection of the second sampling container 142 is the same as the connection of the first sampling container 141, a detailed description of the connection between the adapter 20 and the second sampling container 142 will be omitted.

After the second sampling container 142 is connected, the blocked state of the connection channel 34 by the closing member 48 is released. When the connection channel 34 is opened, the collection target M in the second accommodation chamber 262 is sucked out by the negative pressure inside the second sampling container 142. The collection target M passes through the connection channel 34, the first accommodation chamber 261, the outflow channel 32, the outflow port 36, the connection member 46, the communication tube portion 56 and the needle tube 58 of the adapter 20 from the second accommodation chamber 262, and flows into the second sampling container 142. Thus, substantially the entire amount of the collection target M stored in the second accommodation chamber 262 is transferred to the second sampling container 142. The amount of the collection target M in the second sampling container 142 is, for example, about 8 mL to 10 mL. The second sampling container 142 is removed from the adapter 20. Thus, the collection (sampling) of the collection target M using the collection kit 10 is completed. That is, a first sample MS1 is introduced into the first sampling container 141, and a second sample MS2 is introduced into the second sampling container 142.

In a case where the collection target M is a blood product, a culture test is performed for the first sample MS1 and the second sample MS2. Specifically, the first sample MS1 in the first sampling container 141 is used, for example, for anaerobic culture, and whether or not anaerobic bacteria grow is observed. The second sample MS2 in the second sampling container 142 is used, for example, for aerobic culture, and whether or not aerobic bacteria grow is observed. In both tests, the first sampling container 141 and the second sampling container 142 are used as culture bottles. In a case where the first sample MS1 and the second sample MS2 pass the culture test, the collection target M in the medical bag 12 from which the first sample MS1 and the second sample MS2 are collected is determined to be a passed product. The passed product is used for patient treatment (blood transfusion and the like).

The first embodiment has the following effects.

As illustrated in Fig. 1, the collection kit 10 includes the collection bag 18 connected to the downstream side of the inflow tube 16, and the collection bag 18 includes the plurality of accommodation chambers 26 (the first accommodation chamber 261 and the second accommodation chamber 262) that accommodate the collection target M accommodated in the medical bag 12 and the one outflow port 36 for respectively transferring the collection target M from the plurality of accommodation chambers 26 to the plurality of sampling containers 14 (the first sampling container 141 and the second sampling container 142) (see Figs. 3A and 3B). Thus, since there is only one outflow port 36 provided in the collection kit 10, the collection kit 10 including the plurality of accommodation chambers 26 can be reduced in cost with a simple structure. Furthermore, the work efficiency at the time of collecting the collection target M in the plurality of sampling containers 14 can be improved, and a predetermined amount of the collection target M can be collected.

The collection bag 18 includes the connection channel 34 provided between the plurality of accommodation chambers 26 and connecting the first accommodation chamber 261 and second accommodation chamber 262, which are adjacent to each other. The inflow tube 16 is connected to the first accommodation chamber 261, which is one of the plurality of accommodation chambers 26, and the outflow channel 32 connected to the outflow port 36 is connected to the first accommodation chamber 261, which is the one of the plurality of accommodation chambers 26. Thus, the collection kit 10 can be made compact in the width direction of the collection bag 18 intersecting the extending direction of the connection channel 34.

As illustrated in Figs. 3A and 3B, the adapter 20 to which the first sampling container 141 and the second sampling container 142 are sequentially attached is connected to the outflow port 36. Thus, the attachment of a plurality of first sampling containers 141 and a plurality of second sampling containers 142 to the adapter 20 enables easy connection with the outflow port 36.

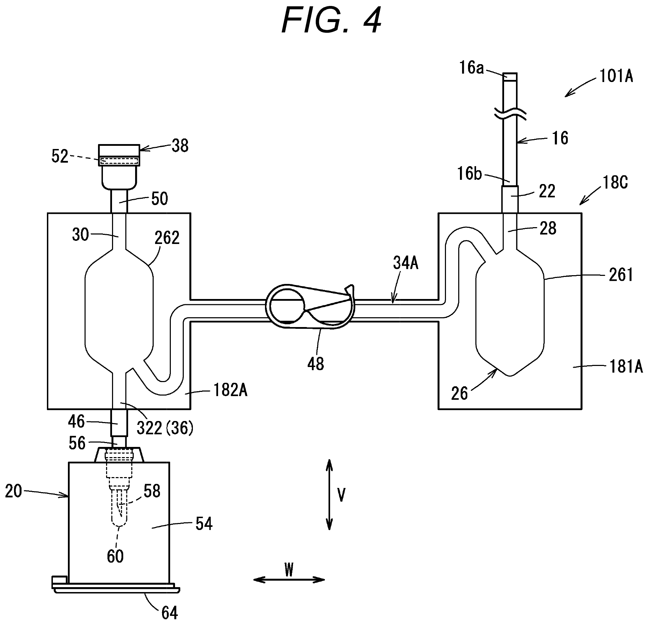

Note that, as illustrated in Fig. 1, the collection kit 10 is not limited to a case where the first accommodation chamber 261 and the second accommodation chamber 262 are arranged in parallel in the up-down direction (a direction of arrow V). For example, a collection kit 101A according to a first modification example illustrated in Fig. 4 includes a collection bag 18C including a first bag 181A and a second bag 182A. The first bag 181A and the second bag 182A are arranged in parallel in the width direction (a direction of arrow W). The first bag 181A includes the first accommodation chamber 261. The second bag 182A includes the second accommodation chamber 262. The first accommodation chamber 261 of the first bag 181A and the second accommodation chamber 262 of the second bag 182A are connected by a connection channel 34A. The connection channel 34A is provided with the closing member 48. The inflow tube 16 is connected to the first bag 181A so as to communicate with the first accommodation chamber 261. The second bag 182A includes the outflow port 36 and the exhaust portion 38. The outflow port 36 communicates with the second accommodation chamber 262 and is connected to the adapter 20. The exhaust portion 38 communicates with the second accommodation chamber 262. The communication state between the first accommodation chamber 261 and the second accommodation chamber 262 via the connection channel 34A can be switched by the closing member 48.

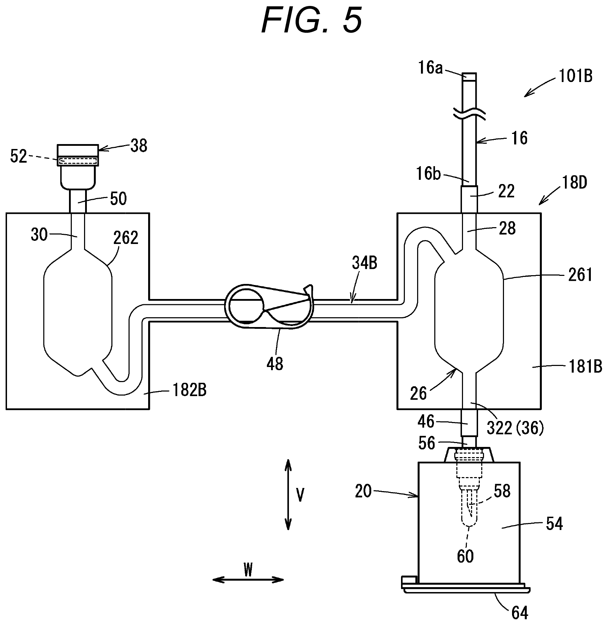

Furthermore, a collection kit 101B according to a second modification example illustrated in Fig. 5 includes a collection bag 18D including a first bag 181B and a second bag 182B. The first bag 181B and the second bag 182B are arranged in parallel in the width direction (a direction of arrow W). The first accommodation chamber 261 of the first bag 181B and the second accommodation chamber 262 of the second bag 182B are connected by a connection channel 34B. The connection channel 34B is provided with the closing member 48. The inflow tube 16 is connected to the first bag 181B so as to communicate with the first accommodation chamber 261. The first bag 181B includes the outflow port 36. The outflow port 36 communicates with the first accommodation chamber 261 and is connected to the adapter 20. The second bag 182B includes the exhaust portion 38. The exhaust portion 38 communicates with the second accommodation chamber 262. The communication state between the first accommodation chamber 261 and the second accommodation chamber 262 via the connection channel 34B can be switched by the closing member 48.

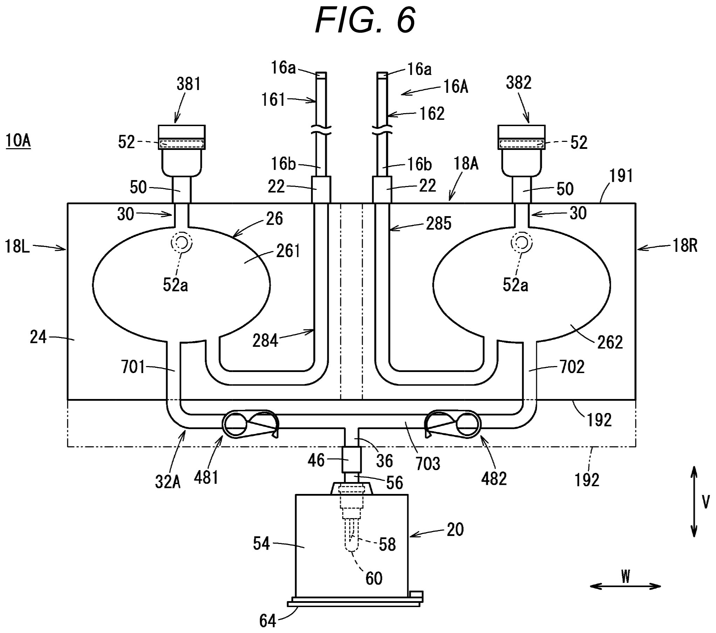

As illustrated in Fig. 6, a collection kit 10A according to a second embodiment includes a plurality of inflow tubes 16A and a collection bag 18A. The collection bag 18A includes a first region 18L and a second region 18R. The first region 18L is a region located on the left side from the center of the collection bag 18A in the width direction. The second region 18R is a region located on the right side from the center of the collection bag 18A in the width direction. Note that the same components as those of the collection kit 10 of the first embodiment are denoted by the same reference signs, and the detailed description of the same components will be omitted.

The plurality of inflow tubes 16A include a first inflow tube 161 and a second inflow tube 162. The first inflow tube 161 and the second inflow tube 162 extend in the up-down direction and are arranged in parallel to be spaced apart from each other in the width direction. Note that the plurality of inflow tubes 16A are not limited to the first inflow tube 161 and the second inflow tube 162. As long as the number of the inflow tubes 16A is the same as the number of the accommodation chambers 26, the number of the inflow tubes 16A may be three or more.

In the width direction of the collection bag 18A, the first inflow tube 161 faces the first region 18L. The first inflow tube 161 is disposed near the center in the width direction of the collection bag 18A in the first region 18L. The downstream end portion 16b of the first inflow tube 161 is connected to the upper side portion 191 of the first region 18L of the collection bag 18A via the relay member 22. The downstream end portion 16b of the first inflow tube 161 is connected to an inflow channel 284. In the width direction of the collection bag 18A, a second inflow tube 162 faces the second region 18R. The second inflow tube 162 is disposed near the center in the width direction of the collection bag 18A in the second region 18R. That is, the first inflow tube 161 and the second inflow tube 162 are disposed adjacent to each other in the width direction of the collection bag 18A. The downstream end portion 16b of the second inflow tube 162 is connected to the upper side portion 191 of the second region 18R of the collection bag 18A via the relay member 22. The downstream end portion 16b of the second inflow tube 162 is connected to an inflow channel 285.

The collection bag 18A includes an outflow channel 32A that connects the first accommodation chamber 261 and the second accommodation chamber 262 to the outflow port 36. The outflow channel 32A includes a first outflow portion 701 connected to the lowermost portion of the first accommodation chamber 261, a second outflow portion 702 connected to the lowermost portion of the second accommodation chamber 262, and a common connection portion 703 connecting the first outflow portion 701 and the second outflow portion 702. Note that the first outflow portion 701 is not limited to a case of being connected to the lowermost portion of the first accommodation chamber 261. The first outflow portion 701 is only required to be connected to at least the lower portion of the first accommodation chamber 261. The second outflow portion 702 is not limited to a case of being connected to the lowermost portion of the second accommodation chamber 262. The second outflow portion 702 is only required to be connected to at least the lower portion of the second accommodation chamber 262.

The first outflow portion 701 is connected to the lowermost portion of the first accommodation chamber 261 and extends in the up-down direction. The lower end of the first outflow portion 701 extends to the lower side portion 192 of the collection bag 18A. The second outflow portion 702 is connected to the lowermost portion of the second accommodation chamber 262 and extends in the up-down direction. The lower end of the second outflow portion 702 extends to the lower side portion 192 of the collection bag 18A.

The common connection portion 703 is exposed to the outside of the collection bag 18A and extends in the width direction. The common connection portion 703 is disposed substantially in parallel to be spaced apart downward from the lower side portion 192 of the collection bag 18A. One end of the common connection portion 703 in the width direction is connected to the lower end of the first outflow portion 701. The other end of the common connection portion 703 in the width direction is connected to the lower end of the second outflow portion 702. The center of the common connection portion 703 in the width direction includes the one outflow port 36.

The common connection portion 703 is provided with a first closing member 481 at a position between the outflow port 36 and the first outflow portion 701. The first closing member 481 is, for example, a clamp. The common connection portion 703 is provided with a second closing member 482 at a position between the outflow port 36 and the second outflow portion 702. The second closing member 482 is, for example, a clamp. Communication between the first accommodation chamber 261 and the outflow port 36 can be blocked by the first closing member 481. Communication between the second accommodation chamber 262 and the outflow port 36 can be blocked by the second closing member 482.

Note that the present invention is not limited to a case where a part of the outflow channel 32A is exposed to the outside of the collection bag 18A. For example, as indicated by a two-dot chain line in Fig. 6, the entire outflow channel 32A may be accommodated and covered inside the collection bag 18A.

Next, a collection method for dispensing the collection target M into the first sampling container 141 and the second sampling container 142 using the collection kit 10A will be described.

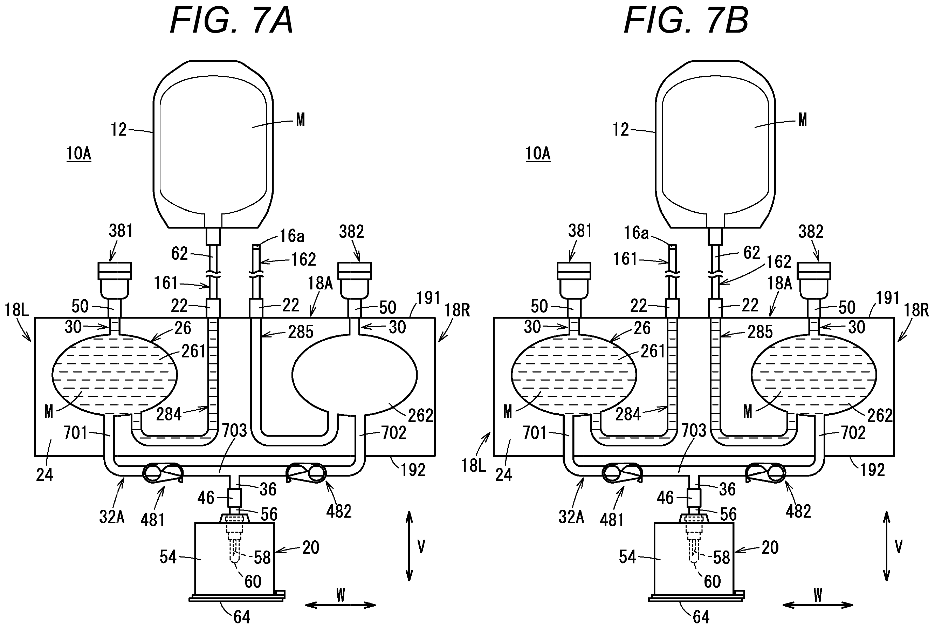

As illustrated in Fig. 7A, the medical bag 12 is connected to the first inflow tube 161. At this time, communication between the outflow port 36 and the first accommodation chamber 261 and the second accommodation chamber 262 through the common connection portion 703 is blocked by the first closing member 481 and the second closing member 482.

The collection target M flows out from the medical bag 12 by gravity and moves to the first accommodation chamber 261 through the first inflow tube 161 and the inflow channel 284. The air in the inflow channel 284 and the first accommodation chamber 261 is discharged to the atmosphere from a first exhaust portion 381 communicating with the first accommodation chamber 261. When the first accommodation chamber 261 is filled with the collection target M and the collection target M flows into the first exhaust portion 381, a required amount of the collection target M is accommodated in the first accommodation chamber 261.

Next, as illustrated in Fig. 7B, the medical bag 12 is separated from the first inflow tube 161 and connected to the second inflow tube 162. At this time, the upstream end portion 16a of the first inflow tube 161 is sealed by welding. The collection target M flows out from the medical bag 12 by gravity and moves to the second accommodation chamber 262 through the second inflow tube 162 and the inflow channel 285. The air in the inflow channel 285 and the second accommodation chamber 262 is discharged to the atmosphere from a second exhaust portion 382 communicating with the second accommodation chamber 262. When the second accommodation chamber 262 is filled with the collection target M and the collection target M flows into the second exhaust portion 382, the required amount of the collection target M is accommodated in the second accommodation chamber 262. Note that the collection kit 10A is not limited to a case where the first exhaust portion 381 and the second exhaust portion 382 are provided. For example, one exhaust portion may be provided in the exhaust channel connected to the first accommodation chamber 261 and the second accommodation chamber 262.

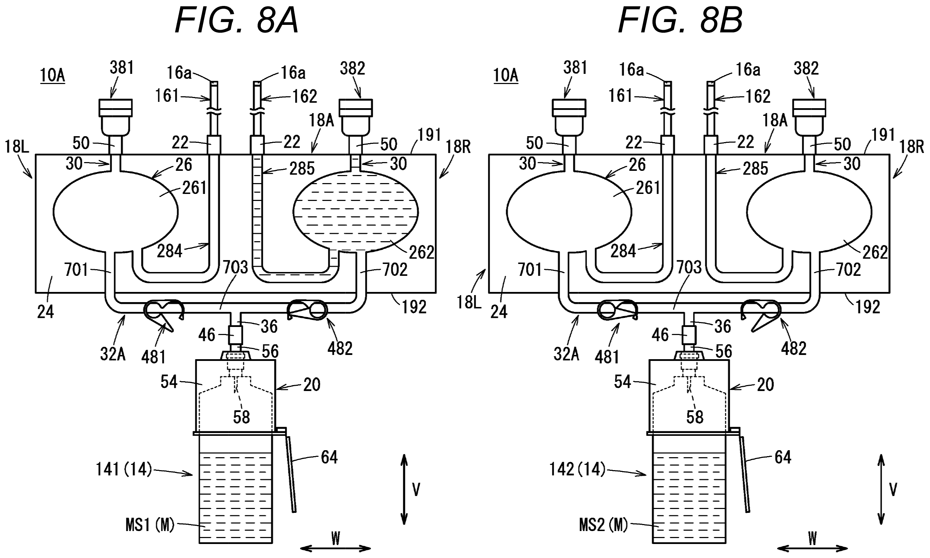

After the medical bag 12 is separated from the second inflow tube 162 and the upstream end portion 16a of the second inflow tube 162 is sealed by welding, the first sampling container 141 is connected to the adapter 20 as illustrated in Fig. 8A. The operator bends the plug of the connection member 46 to break the plug, thereby opening the outflow channel 32A. Moreover, when the blocked state of the outflow channel 32A by the first closing member 481 is released, the collection target M in the first accommodation chamber 261 is sucked out by the negative pressure and transferred to the first sampling container 141 through the outflow channel 32A, the outflow port 36, and the adapter 20.

Next, after the first sampling container 141 is removed from the adapter 20, the outflow channel 32A is blocked again by the first closing member 481. As illustrated in Fig. 8B, when the second sampling container 142 is connected to the adapter 20 and the blocked state of the outflow channel 32A by the second closing member 482 is released, the collection target M in the second accommodation chamber 262 is sucked out by the negative pressure and transferred to the second sampling container 142 through the outflow channel 32A, the outflow port 36, and the adapter 20. At this time, communication between the first accommodation chamber 261 and the outflow channel 32A is blocked by the first closing member 481. The second sampling container 142 is removed from the adapter 20. Thus, the collection (sampling) of the collection target M using the collection kit 10A is completed.

The second embodiment has the following effects.

As illustrated in Figs. 7A and 7B, the collection kit 10A includes a plurality of first and second inflow tubes 161 and 162 respectively connected to a plurality of first and second accommodation chambers 261 and 262, and the outflow channel 32A connecting the first accommodation chamber 261 and the second accommodation chamber 262 to the outflow port 36. Thus, by connecting the medical bag 12 to each of the first inflow tube 161 and the second inflow tube 162, the collection target M can be accommodated in each of the first accommodation chamber 261 and the second accommodation chamber 262 from the first inflow tube 161 and the second inflow tube 162.

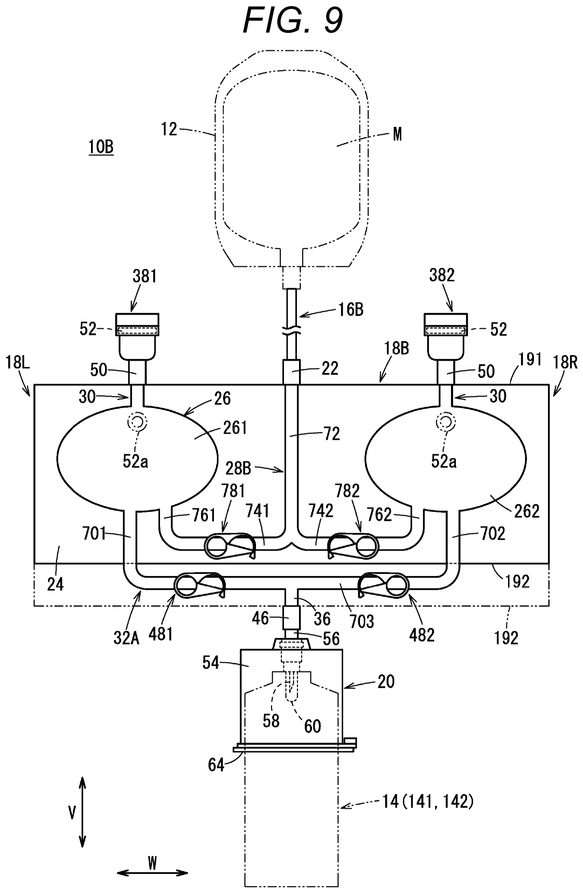

As illustrated in Fig. 9, a collection kit 10B according to a third embodiment includes an inflow tube 16B and a collection bag 18B. The collection bag 18B includes an inflow channel 28B connected to the downstream side of the inflow tube 16B and the outflow channel 32A connecting the first accommodation chamber 261 and the second accommodation chamber 262 to the outflow port 36. Note that the same components as those of the collection kit 10A of the second embodiment are denoted by the same reference signs, and the detailed description of the same components will be omitted.

The inflow channel 28B includes a common channel 72, and a first branch channel 741 and a second branch channel 742 which are branched from the common channel 72 and respectively connected to the first accommodation chamber 261 and the second accommodation chamber 262.

The common channel 72 is disposed at the center of the collection bag 18B in the width direction. The common channel 72 extends along the up-down direction from the upper side portion 191 toward the lower side portion 192 of the collection bag 18B.

The first branch channel 741 and the second branch channel 742 are connected to the downstream end of the common channel 72. The first branch channel 741 is provided in the first region 18L of the collection bag 18B. The first branch channel 741 includes a first turn-back portion 761 extending from the common channel 72 in the width direction and then folded upward. The first turn-back portion 761 is connected to the lower portion of the first accommodation chamber 261. The second branch channel 742 is provided in the second region 18R of the collection bag 18B. The second branch channel 742 includes a second turn-back portion 762 extending from the common channel 72 in the width direction and then folded upward. The second turn-back portion 762 is connected to the lower portion of the second accommodation chamber 262. The first branch channel 741 is provided with a first inflow-side closing member 781. The communication between the inflow tube 16B and the first accommodation chamber 261 can be blocked by the first inflow-side closing member 781. The second branch channel 742 is provided with a second inflow-side closing member 782. The communication between the inflow tube 16B and the second accommodation chamber 262 can be blocked by the second inflow-side closing member 782.

Next, a collection method for dispensing the collection target M into the first sampling container 141 and the second sampling container 142 using the collection kit 10B will be described.

First, the medical bag 12 is connected to the inflow tube 16B. At this time, the first inflow-side closing member 781 is opened to allow the first accommodation chamber 261 and the inflow tube 16B to communicate with each other. The second inflow-side closing member 782 is opened to allow the second accommodation chamber 262 and the inflow tube 16B to communicate with each other. The collection target M flows out from the medical bag 12 by gravity and moves to the first accommodation chamber 261 and the second accommodation chamber 262 through the inflow tube 16B, and the common channel 72, the first branch channel 741, and the second branch channel 742 of the inflow channel 28B. The collection target M having moved from the common channel 72 to the first branch channel 741 flows into the first accommodation chamber 261. The collection target M having moved from the common channel 72 to the second branch channel 742 flows into the second accommodation chamber 262. When the collection target M reaches and flows into the first exhaust portion 381 and the second exhaust portion 382, the first accommodation chamber 261 and the second accommodation chamber 262 are filled.

In a case where the collection target M in the first accommodation chamber 261 is collected in the first sampling container 141, in a state where the first inflow-side closing member 781 is blocked and the first sampling container 141 is connected to the adapter 20, the operator bends the plug of the connection member 46 to break the plug, and opens the outflow channel 32A. Moreover, the blocked state of the outflow channel 32A by the first closing member 481 is released. The collection target M flows from the first accommodation chamber 261 into the first sampling container 141. In a case where the collection target M in the second accommodation chamber 262 is collected in the second sampling container 142, the blocked state of the outflow channel 32A by the second closing member 482 is released, in a state where the second inflow-side closing member 782 is blocked and the second sampling container 142 is connected to the adapter 20. The collection target M flows from the second accommodation chamber 262 into the second sampling container 142.

The third embodiment has the following effects.

As illustrated in Fig. 9, the collection bag 18B includes the common channel 72 connected to the downstream side of the inflow tube 16B, the first branch channel 741 and the second branch channel 742, which are branched from the common channel 72 and respectively connected to the plurality of accommodation chambers 26, and the outflow channel 32A connecting the first accommodation chamber 261 and the second accommodation chamber 262 to the outflow port 36. Thus, the collection target M can be accommodated in a plurality of first and second accommodation chambers 261 and 262 through one common channel 72.

Note that the present invention is not limited to the above-described disclosure, and various configurations may be adopted without departing from the gist of the present invention.

## Claims

1. A collection kit for sequentially collecting a collection target accommodated in a medical bag into a plurality of sampling containers, the collection kit comprising:
an inflow tube to which the medical bag is connected; and
a collection bag that is connected to a downstream side of the inflow tube and formed by overlapping and welding two flexible sheets,
wherein the collection bag includes
a plurality of accommodation chambers that accommodate the collection target,
one outflow port for respectively transferring the collection target from the plurality of accommodation chambers to the plurality of sampling containers, and
an exhaust portion for exhausting air inside the plurality of accommodation chambers.

2. The collection kit according to claim 1, further comprising
a connection channel that is provided between the plurality of accommodation chambers and connects the accommodation chambers, which are adjacent to each other,
wherein the inflow tube is connected to one of the plurality of accommodation chambers, and an outflow channel connected to the outflow port is connected to one of the plurality of accommodation chambers or another accommodation chamber.

3. The collection kit according to claim 1, further comprising:
a plurality of the inflow tubes that are respectively connected to the plurality of accommodation chambers; and
an outflow channel that connects the plurality of accommodation chambers and the outflow port.

4. The collection kit according to claim 1, wherein
the collection bag includes
a common channel that is connected to the downstream side of the inflow tube,
a plurality of branch channels that are branched from the common channel and respectively connected to the plurality of accommodation chambers, and
an outflow channel that connects the plurality of accommodation chambers and the outflow port.

5. The collection kit according to any one of claims 1 to 4, wherein
an adapter to which the plurality of sampling containers are sequentially attached is connected to the outflow port.
